# EUROPÄISCHE PATENTSCHRIFT

(11) **EP 1 754 406 B1**
(45) Veröffentlichungstag und Bekanntmachung des Hinweises auf die Patenterteilung: **20.08.2008**
(21) Anmeldenummer: 06016054.6
(22) Anmeldetag: 02.08.2006
(51) Int. Cl.: A01C 7/04

(54) **Vorrichtung zum Zuführen von Samenkörnern**
Seed feeding device
Dispositif pour fournir des semences

(30) Priorität: 19.08.2005 DE 102005039317
(43) Veröffentlichungstag der Anmeldung: 21.02.2007
(73) Patentinhaber: Amazonen-Werke H. Dreyer GmbH & Co. KG, 49205 Hasbergen (DE)
(72) Erfinder: Jan Johannaber, Stefan, 49536 Lienen (DE); Götzen, Nils, 49078 Osnabrück (DE); Wiebusch, Thorsten, 49205 Hasbergen (DE)

(56) Entgegenhaltungen:
- DE-A1- 10 140 773
- FR-A1- 2 641 441
- FR-A1- 2 697 130
- US-A- 4 449 642

## Beschreibung

Die Erfindung betrifft eine Vorrichtung zum Zuführen von Samenkörnern gemäß des Oberbegriffes des Patentanspruches 1.

Eine derartige Vorrichtung ist beispielsweise durch die DE 101 40 773 B4 bekannt. Bei dieser als Einzelkornsämaschine ausgebildeten Vorrichtung ist zwischen dem Versorgungsfach und dem Durchmengungsfach ein Regulierungsfach angeordnet. Im Bereich des Durchmengungsfaches sind in der Nähe des Vereinzelungsorgans Öffnungen zum Durchlass von Druckluft in Richtung des Vereinzelungsorgans mit einer nach oben gerichteten Komponente angeordnet. Die Öffnungen zum Durchlass von Druckluft sind senkrecht zu dem Boden des Durchmengungsfaches angeordnet, wobei der Boden unter einem Winkel von 45° zur Horizontalen angeordnet ist. Ein Nachrutschen der sich im Versorgungsfach befindlichen Samenkörner über das Regulierungsfach und das Durchmengungsfach an die Trommel wird durch die Schwerkraft aufgrund der steilen Anstellung des Bodens unter einem Winkel von 45° erreicht. Um das Anlagern der Saatkörner an die Perforierungen des perforierten Vereinzelungsorgans zu erleichtern, sollen die Saatkörner durch die eingeblasene Druckluft in einen fluidisierten Zustand versetzt werden. Aufgrund der steilen Anstellung des Bodens von Versorgungsfach, Regulierung- und Durchmengungsfach ist die zusätzliche Anordnung des Regulierungsfaches zwischen dem Versorgungsfach und dem Durchmengungsfach erforderlich. Eine gezielte Zuführung des Saatgutes durch den Luftstrom vom Versorgungsfach zum Durchmengungsfach an das Vereinzelungsorgan findet nicht statt.

Der Erfindung liegt die Aufgabe zugrunde, gleichzeitig eine Fluidisierung des Saatgutes im Bereich des Vereinzelungsorgans und eine gezielte Zuführung der Saatkörner aus dem Versorgungsfach über das Durchmengungsfach an den Anlagerungsbereich des Vereinzelungsorgans zu erreichen.

Diese Aufgabe wird erfindungsgemäß durch die Merkmale kennzeichnenden Teils des Anspuchs 1 gelöst.

Infolge dieser Maßnahme wird durch die entsprechende Ausrichtung der Öffnungen zum Durchlass von Druckluft ein orientiertes Fließbett erzeugt, welches gleichzeitig die gezielte Zuführung der Saatkörner von dem Versorgungsfach über das Durchmengungsfach an das Vereinzelungsorgan in gleichmäßiger Weise gewährleistet sowie eine Fluidisierung des zuströmenden Saatgutstromes im Bereich der Vereinzelungstrommel wird erreicht, so dass eine gute Anlagerung der Körner an die Perforierungen erreicht wird. Die Samenkörner werden quasi gegen das Vereinzelungsorgan geworfen.

Eine einfache Ausgestaltung der Öffnungen lässt sich dadurch erreichen, dass die Schlitze eine gleiche Breite aufweisen.

Eine vorteilhafte Ausgestaltung der Öffnungen ergibt sich dadurch, dass die Öffnungen schlitzartig ausgebildet sind.

In einer Ausführungsform ist bezüglich der Anordnungen der Öffnungen, die hintereinander im Bereich des Bodens des Durchmengungsfachs angeordnet sind, vorgesehen, dass in Strömungsrichtung der aus den Öffnungen ausströmenden Luft gesehen, mehrere Öffnungen hintereinander angeordnet sind, dass die zu dem Vereinzelungsorgan dichter angeordneten Öffnungen einen größeren Austrittsquerschnitt als die vom Vereinzelungsorgan entfernter gelegenen Öffnungen aufweisen.

Auch ist es möglich, dass die Schlitze eine gleiche Bereite, sowie einen gleichen Austrittsquerschnitt aufweisen.

Weitere Ausgestaltungen der Öffnungen sind in den Ansprüchen 6 und 7 beansprucht.

Eine vorteilhafte Ausgestaltung der Öffnungen lässt sich dadurch erreichen, dass zur Schaffung des als Öffnung ausgebildeten Luftschlitzes der dem Vereinzelungsorgan jeweils benachbarten Bereiche nach unten und der dem Vereinzelungsorgan jeweils abgewandte Bereich nach oben durchgeprägt ist.

Eine vorteilhafte Anordnung und Ausgestaltung des Bodens des Durchmengungsfaches lässt sich dadurch erreichen, dass der Boden eine Neigung zwischen 8° und 20°, vorzugsweise 13° zur Horizontalen aufweist.

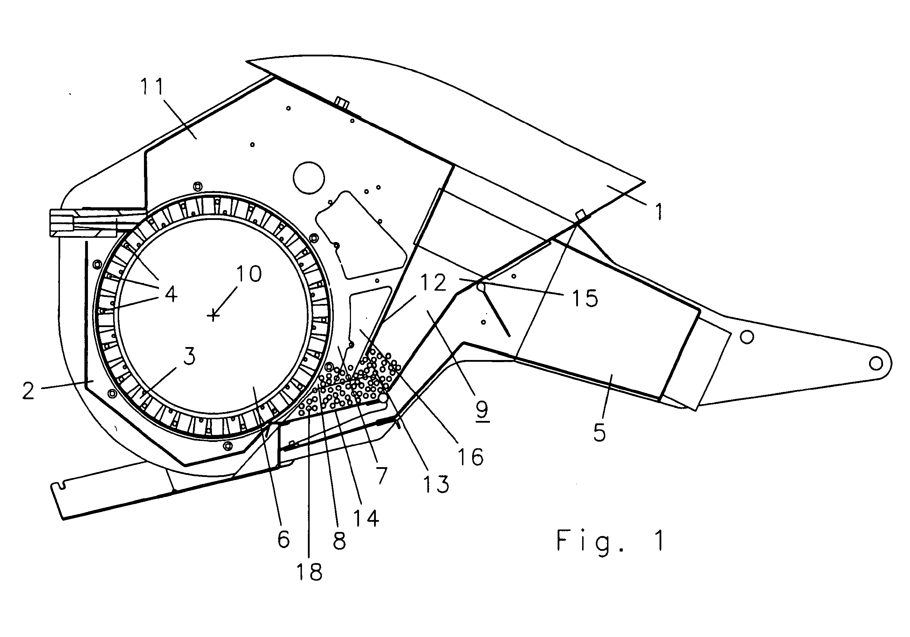

Weitere Einzelheiten der Erfindung sind den übrigen Unteransprüchen, der Beispielsbeschreibung und den Zeichnungen zu entnehmen. Hierbei zeigen
- Fig. 1: die Vereinzlungsvorrichtung der Einzelkornsämaschine in vereinfachter ausschittsweiser Darstellung in Seitenansicht,
- Fig. 2: den Zuführungsbereich der Vereinzelungsvorrichtung in Teilansicht und vergrößertem Maßstab in der Ansicht II-II,
- Fig. 3: den Boden der Vereinzelungsvorrichtung im Zuführungsbereich in der Draufsicht,
- Fig. 4: den Boden in der Ansicht III-III,
- Fig. 5: den Boden der Vereinzelungsvorrichtung in der Draufsicht und
- Fig. 6: den Boden gemäß Fig. 5 in der Ansicht V-V.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind kreisförmig angeordnete Perforationsreihen 4 angeordnet. Der Vorratsbehälter 1 und das Gehäuse 2 oberhalb der Trommel 3 sind zumindest annähernd druckdicht mittels eines Deckels verschlossen. Über den Luftanschlusskasten 5 ist der Vorratsbehälter 1 und das Gehäuse 2 oberhalb der Trommel 3 durch das in dem Anschlusskasten 5 angeschlossene und nicht dargestellte Druckgebläse mit Druckluft beaufschlagbar, so dass die Perforationsreihen 4 mit einer Druckdifferenz zwischen dem Innenraum 6 der Vereinzelungstrommel 3 und dem Außenbereich 7 der Vereinzelungstrommel 3 erzeugt wird. Aufgrund dieser Druckdifferenz lagern sich an den Perforationsreihen 4 der Vereinzelungstrommel 3, wenn diese durch den Saatgutvorrat 8, der sich aufgrund der Führung des Saatgutschachtes 9 bis unterhalb der Drehachse 10 der Trommel 3 erstreckt, die Samenkörner an. Der Saatgutvorratsbehälter 1 bzw. das Gehäuse unterhalb des Saatgutvorratsbehälters 1, in dem die Vereinzelungstrommel 3 drehend und abdichtend gelagert ist, weist die einander beabstandeten Seitenwände 11 auf, die sich parallel zur Bewegungsrichtung der Trommel 3 erstrecken und mit der Trommel 3 zumindest annähernd abdichtend zusammen wirken.

Der Versorgungsschacht 9 des Verteilergehäuses 2 ist durch eine aufrecht verlaufende Wand 12, deren unterer Rand 13 beabstandet zu dem Boden 14 des Verteilergehäuses 2 endet, in ein Versorgungsfach 15 und ein Durchmengungsfach 16 unterteilt. Des Boden 14 des Schachtes 9 weist Öffnungen 17 zum Durchlass von Druckluft in das Verteilergehäuse 2 auf. Diese Druckluft gelangt durch den Anschlusskasten 5 in diesen Bereich 18.

Der Boden 13 weist einen Neigungswinkel 19 zwischen 8-20°, vorzugsweise 13° zur Horizontalen 20 auf.

Aufgrund der geringen Neigung des Bodens 14 zur Horizontalen 20 zwischen 8-20°, vorzugsweise 13° zur Horizontalen 20 rutscht das sich im Versorgungsfach 15 befindliche Saatgut 8 aufgrund der Eigenreibung zwischen den einzelnen Samenkörnern gezielt nach. Die Zuführung der Samenkörner wird durch das Einblasen von Druckluft durch die Öffnungen 17 in den Boden 14 gesteuert, so dass immer ausreichend Saatgut 8 aus dem Versorgungsfach 15 in das Durchmengungsfach 16 nachfließt. Durch die eingeblasene Druckluft, durch die Öffnungen 17 in den Boden 14 wird das Saatgut im Bereich der Trommel 3 aufgelockert, so dass es teilweise einen Fluidisierungszustand erreicht, so dass das Anlagern der Samenkörner an den Perforierungen der Perforationsreihen 4 der Trommel 3 erleichtert wird. Aufgrund der herrschenden Druckdifferenz zwischen Innenraum 6 und Außenraum 7 der Trommel 3 lagern sich die Samenkörner an den Perforierungen der Trommel 3 an.

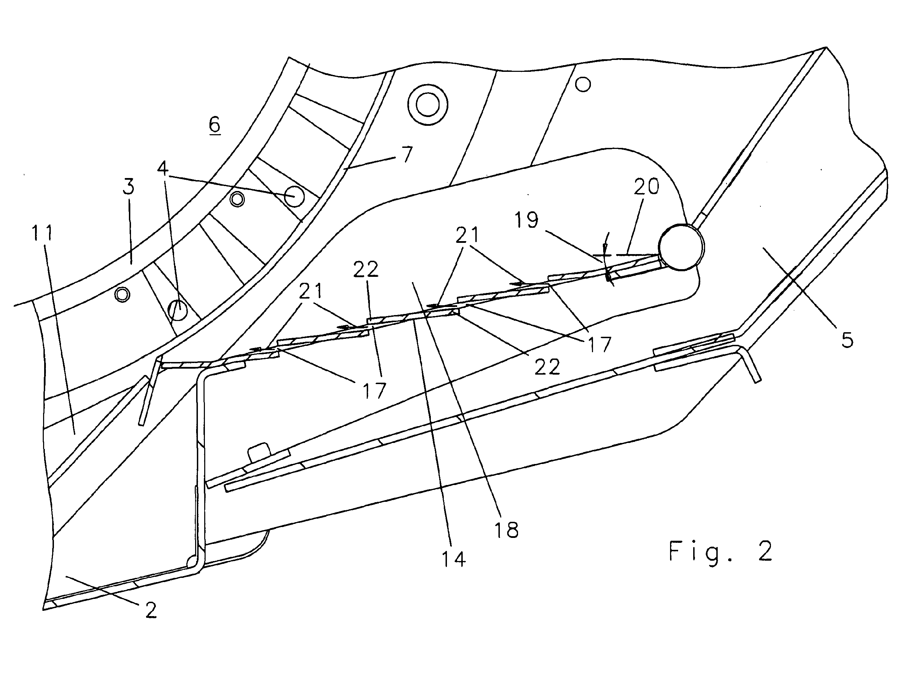

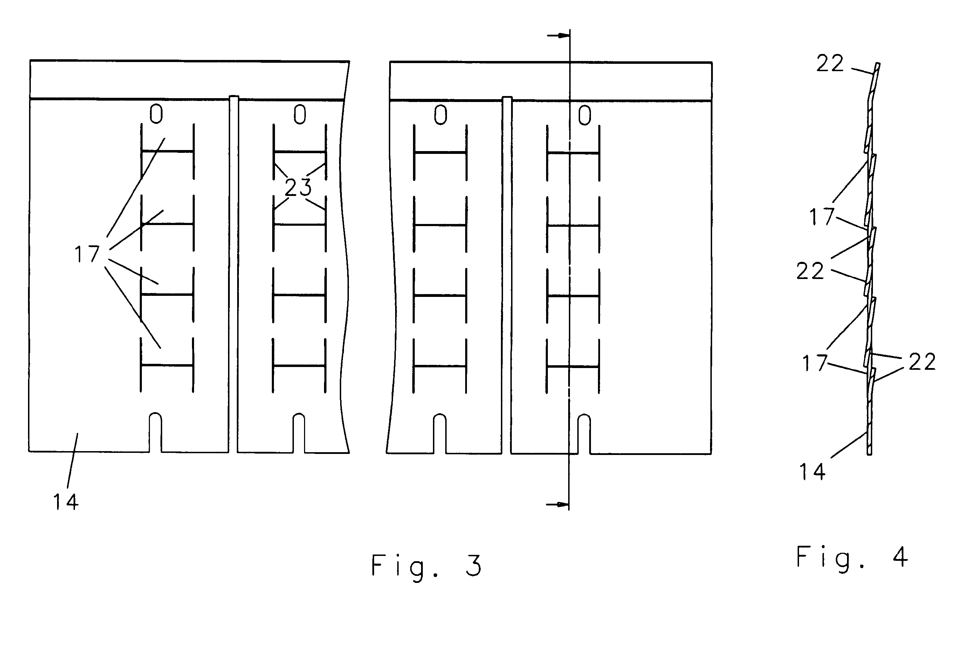

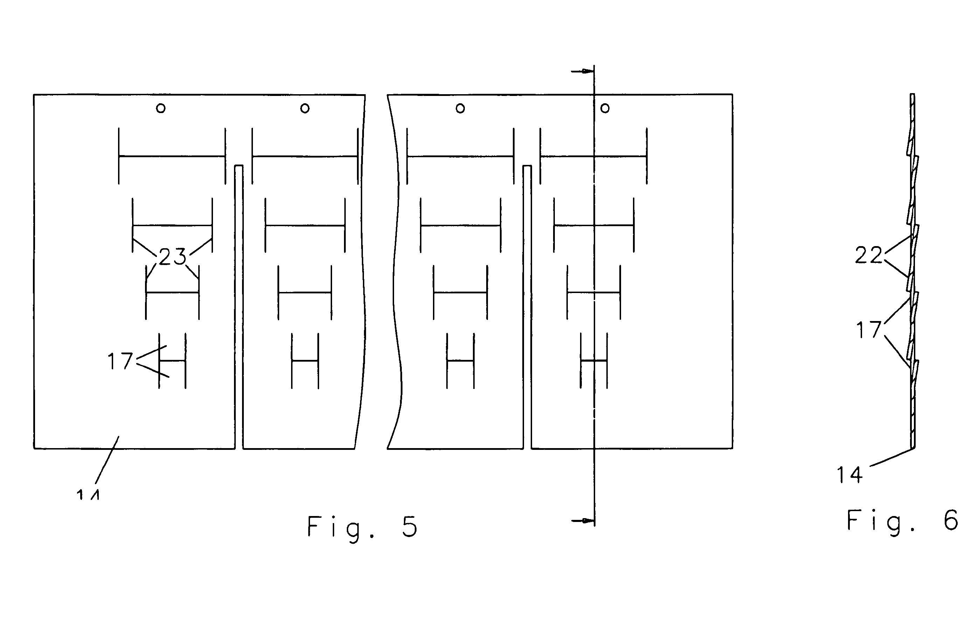

Die Öffnungen 17 zum Durchlass von Druckluft sind derart ausgerichtet, dass die Druckluft zumindest annähernd parallel zum Boden und in Richtung des Vereinzelungsorgans aus den Öffnungen 17 ausströmt, wie die Pfeile 21 zeigen. Die Samenkörner des Saatgutvorrates werden durch die Luftströmung aufgelockert, in Richtung der Vereinzelungstrommel bewegt und quasi gegen die Vereinzelungstrommel geworfen, so dass sie sich leichter an die Perforierung der Perforationsreihen anlagern können. Die Öffnungen 17 in dem Boden 14 sind, wie Fig. 2 und 4 zeigen durch schuppenartige ausgebildete Durchprägungen bzw. Ausformungen in den Boden 14 gebildet. Hierzu sind, wie Fig. 3 zeigt Schlitze in den Boden 14 angebracht, wobei zur Schaffung des als Öffnung ausgebildeten Luftschlitzes der dem Vereinzelungsorgan jeweils benachbarte Bereich nach unten von der dem Vereinzelungsorgan jeweils abgewandte Bereich nach oben durchgeprägt ist, wie Fig. 2 und 4 in Verbindung mit Fig. 3 zeigen. Wie bereits erwähnt sind die Öffnungen schlitzartig ausgebildet. In Strömungsrichtung der aus den Öffnungen ausströmenden Luft gesehen, sind mehrere Öffnungen hintereinander angeordnet. Die Schlitze weisen, wie Fig. 3 zeigt die gleiche Breite auf. Der Boden nach dem Ausführungsbeispiel gemäß Fig. 5 und 6 unterscheidet sich von dem Ausführungsbeispiel gemäß Fig. 2 und 4 dadurch, dass die zu dem Vereinzelungsorgan dichter angeordneten Öffnung eine größere Schlitzbreite als die weiter vom Vereinzelungsorgan gelegenen Öffnungen aufweisen. Es ist auch möglich, dass die zu dem Vereinzelungsorgan dichter angeordneten Öffnungen eine kleinere Schlitzbreite als die weiter vom Vereinzelungsorgan entfernt gelegenen Öffnungen aufweisen. Auch diese Öffnungen werden durch eine entsprechende Durchprägung nach oben oder nach unten der einzelnen Abschnitte geschaffen, wie zu den Fig. 2-4 beschrieben ist.

## Patentansprüche

1. Vorrichtung zum Zuführen von Samenkörnern zu einem rotierend und/oder umlaufenden sowie perforierten Vereinzelungsorgan (3), wie Vereinzelungstrommel, Vereinzelungsband -riemen einer Einzelkornsämaschine, wobei die Vorrichtung aus einem Verteilergehäuse (2) gebildet ist, das an das Vereinzelungsorgan (3) anschließt und sich horizontal über deren gesamte Breite erstreckt und das mit einem zum Vereinzelungsorgan (3) geneigten Boden (14) versehen ist, der bis an das perforierte Organ (3) anschließt, wobei das Verteilergehäuse (2) durch eine mit ihrem unteren Rand (13) beabstandet zum Boden (14) angeordnete, aufrecht verlaufende Wand (12) in ein Versorgungsfach (15) und ein Durchmengungsfach (16) unterteilt ist, wobei in dem Boden (14) des Durchmengungsfaches (16) in dem dem Organ (3) benachbarten Bereich Öffnungen (17) zum Durchlass von Druckluft in das Verteilergehäuse (2) angeordnet sind, **dadurch gekennzeichnet, dass** die Öffnungen (17) zum Durchlass von Druckluft derart ausgerichtet sind, dass die Druckluft zumindest annähernd parallel zum Boden (14) und in Richtung des Vereinzelungsorgans (3) aus den Öffnungen (17) ausströmt.

2. Vorrichtung nach Anspruch 1, **dadurch gekennzeichnet, dass** die Öffnungen (17) durch schuppenartig ausgebildete Durchprägungen und/oder Ausformungen in dem Boden (14) gebildet sind.

3. Vorrichtung nach Anspruch 1, **dadurch gekennzeichnet, dass** die Öffnungen (17) schlitzartig ausgebildet sind.

4. Vorrichtung nach einem oder mehreren der vorstehenden Ansprüche, **dadurch gekennzeichnet, dass** in Strömungsrichtung der aus den Öffnungen (17) ausströmenden Luft gesehen, mehrere Öffnungen (17) hintereinander angeordnet sind, dass die zu dem Vereinzelungsorgan (3) dichter angeordneten Öffnungen (17) einen größeren Austrittsquerschnitt als die vom Vereinzelungsorgan (3) entfernter gelegenen Öffnungen (17) aufweisen.

5. Vorrichtung nach einem der Ansprüche 3-4, **dadurch gekennzeichnet, dass** die Schlitze (17) eine gleiche Breite aufweisen.

6. Vorrichtung nach einem der Ansprüche 3-5, **dadurch gekennzeichnet, dass** die zu dem Vereinzelungsorgan (3) dichter angeordneten Öffnungen (17) eine größere Schlitzbreite als die weiter vom Vereinzelungsorgan (13) entfernt gelegenen Öffnungen (17) aufweisen.

7. Vorrichtung nach einem oder mehreren der vorstehenden Ansprüche, **dadurch gekennzeichnet, dass** die zu dem Vereinzelungsorgan (3) dichter angeordneten Öffnungen (17) eine kleinere Schlitzbreite als die weiter vom Vereinzelungsorgan (3) entfernt gelegenen Öffnungen (17) aufweisen.

8. Vorrichtung nach einem oder mehreren der vorstehenden Ansprüche, **dadurch gekennzeichnet, dass** zur Schaffung des als Öffnung ausgebildeten Luftschlitzes (17) der dem Vereinzelungsorgan (3) jeweils benachbarten Bereiche nach unten und der dem Vereinzelungsorgan (3) jeweils abgewandte Bereich nach oben durchgeprägt ist.

9. Vorrichtung nach einem oder mehreren der vorstehenden Ansprüche, **dadurch gekennzeichnet, dass** der Boden (14) eine Neigung zwischen 8° und 20°, vorzugsweise 13° zur Horizontalen aufweist.

## Claims

1. Apparatus for supplying seed grains to a rotating and/or circulating and perforated separating element (3), such as a separating drum, a separating strap or belt of a single-grain dispensing seed drill, the apparatus being formed from a distributor housing (2) which communicates with the separating element (3) and extends horizontally over its entire width, and which is provided with a base (14), which is inclined towards the separating element (3) and communicates as far as the perforated element (3), the distributor housing (2) being divided, by an upwardly extending wall (12) which is disposed with its lower edge (13) at a spacing from the base (14), into a supplying compartment (15) and a mixing compartment (16), openings (17) being disposed in the base (14) of the mixing compartment (16), in the region adjacent the element (3), for compressed air to pass into the distributor housing (2), **characterised in that** the openings (17) for the passage of compressed air are orientated in such a manner that the compressed air flows from the openings (17) at least approximately parallel to the base (14) and in the direction of the separating element (3).

2. Apparatus according to claim 1, **characterised in that** the openings (17) are formed by imbricated indentations and/or recesses in the base (14).

3. Apparatus according to claim 1, **characterised in that** the openings (17) have a slot-like configuration.

4. Apparatus according to one or more of the preceding claims, **characterised in that,** when viewed with respect to the flow direction of the air flowing from the openings (17), a plurality of openings (17) are disposed behind one another, and **in that** the openings (17), disposed more closely to the separating element (3), have a greater outlet cross-section than the openings (17) situated more remotely from the separating element (3).

5. Apparatus according to one of claims 3 - 4, **characterised in that** the slots (17) have an identical width.

6. Apparatus according to one of claims 3 - 5, **characterised in that** the openings (17), disposed more closely to the separating element (3), have a larger slot width than the openings (17) situated more remotely from the separating element (3).

7. Apparatus according to one or more of the preceding claims, **characterised in that** the openings (17), disposed more closely to the separating element (3), have a smaller slot width than the openings (17) situated more remotely from the separating element (3).

8. Apparatus according to one or more of the preceding claims, **characterised in that**, to create the air slot (17), which is configured as an opening, the respective region adjacent the separating element (3) is stamped-through downwardly, and the respective region remote from the separating element (3) is stamped-through upwardly.

9. Apparatus according to one or more of the preceding claims, **characterised in that** the base (14) has an inclination between 8° and 20°, preferably 13°, relative to the horizontal.

## Revendications

1. Dispositif pour alimenter en graines de semences un organe séparateur (3), tournant et/ou en rotation et muni de perforations tel qu'un tambour séparateur, une bande séparatrice, une courroie séparatrice d'un semoir de précision,
le dispositif se composant d'un boîtier distributeur (2) relié à l'organe séparateur (3) et s'étendant horizontalement sur toute la largeur et muni d'un fond (14) incliné par rapport à l'organe séparateur (3), ce fond rejoignant l'organe perforé (3),
le boîtier de distributeur (2) étant subdivisé par une cloison debout (12) dont le bord inférieur (13) est écarté du fond (14), en un compartiment d'alimentation (15) et un compartiment de mélange (16),
le fond (14) du compartiment de mélange (16) comportant dans la zone voisine, des orifices (17) permettant le passage de l'air comprimé dans le boîtier de distribution (2),
**caractérisé en ce que**
les orifices (17) pour le passage de l'air comprimé sont alignés de façon que l'air comprimé arrive au moins sensiblement parallèlement au fond (14) en sortant des orifices (17), en direction de l'organe séparateur (3).

2. Dispositif selon la revendication 1,
**caractérisé en ce que**
les orifices (17) sont constitués par des impressions en forme d'écailles et/ou des déformations réalisées dans le fond (14).

3. Dispositif selon la revendication 1,
**caractérisé en ce que**
les orifices (17) sont en forme de fentes.

4. Dispositif selon l'une ou plusieurs des revendications précédentes,
**caractérisé en ce que**
plusieurs orifices (17) sont disposés les uns derrière les autres dans la direction de l'écoulement de l'air sortant des orifices (17), de façon que les orifices (17) les plus proches de l'organe séparateur (13), présentent une section de sortie plus grande que les orifices (17) éloignés de l'organe séparateur (3).

5. Dispositif selon l'une des revendications 3 à 4,
**caractérisé en ce que**
les fentes (17) ont une même largeur.

6. Dispositif selon l'une des revendications 3 à 5,
**caractérisé en ce que**
les orifices (17) les plus proches de l'organe séparateur (3) ont une largeur de fente plus grande que les organes séparateurs (3) plus éloignés des orifices (17).

7. Dispositif selon l'une ou plusieurs des revendications précédentes,
**caractérisé en ce que**
les orifices (17) les plus proches de l'organe séparateur (3) ont une fente de largeur moindre que les orifices (17) situés dans les positions plus éloignées de l'organe séparateur (3).

8. Dispositif selon une ou plusieurs des revendications précédentes,
**caractérisé en ce que**
pour créer la fente d'air (17) en forme d'orifice, les régions chaque fois voisines de l'organe séparateur (3) sont défoncées vers le bas et la région opposée chaque fois à l'organe séparateur (3) est défoncée vers le haut.

9. Dispositif selon une ou plusieurs des revendications précédentes,
**caractérisé en ce que**
le fond (14) a une inclinaison comprise entre 8° et 20°, de préférence égale à 13° par rapport à la direction horizontale.
